# EUROPEAN PATENT SPECIFICATION

(11) **EP 4 005 363 B1**
(45) Date of publication and mention of the grant of the patent: **02.04.2025**
(21) Application number: 21210148.9
(22) Date of filing: 24.11.2021
(51) Int. Cl.: A01D 34/86, A01D 43/077

(54) **BOOM SYSTEM, VEHICLE AND METHOD FOR CUTTING VEGETATION**
AUSLEGERSYSTEM, FAHRZEUG UND VERFAHREN ZUM SCHNEIDEN VON VEGETATION
SYSTÈME DE FLÈCHE, VÉHICULE ET PROCÉDÉ DE COUPE DE VÉGÉTATION

(30) Priority: 25.11.2020 NL 2026977
(43) Date of publication of application: 01.06.2022
(73) Proprietor: Herder B.V., 4338 PL Middelburg (NL)
(72) Inventor: VAN DER WEELE, Arie Adrianus, 4338 PL MIDDELBURG (NL); DE VISSER, Adriaan, 4338 PL MIDDELBURG (NL); VAN DRIEL, Nelis Jacob, 4338 PL MIDDELBURG (NL)
(74) Representative: EP&C

(56) References cited:
- EP-A1- 1 759 571
- EP-A1- 1 806 046
- DE-U1- 20 003 154
- DE-U1- 202017 107 240
- US-A1- 2016 150 718

## Description

The invention relates to a boom system for moving a vegetation cutting tool relative to a vehicle and supporting the vegetation cutting tool during operation thereof. Further, the invention relates to a vehicle comprising the boom system. Further, the invention relates to a method for cutting vegetation using a vegetation cutting tool attached to the boom system.

Areas where vegetation grows, such as verges, banks and ditches, vegetation is cut from time to time to prevent the areas from being overgrown. Some of these areas are difficult to mow by driving a vehicle with a mover over the area, for example because the area is at a steep slope or because there are objects in the area that need to be avoided, such as lampposts or street signs.

To cut vegetation without the need to drive the vehicle over the area, boom systems have been developed. One end of the boom system is mounted on a vehicle. The other end of the boom system is coupled to a vegetation cutting tool. By extending the boom system, the vegetation cutting tool can reach vegetation at several meters away from the vehicle. This way, the vehicle is able to stay away from the area that is being mown. For example, the vehicle is driving along a road, while the boom system supports the vegetation cutting device to cut the verge next to the road.

Although driving the vehicle while cutting the vegetation provides a time efficient way to maintain the vegetated areas, the driver of the vehicle needs to be careful not to collide the boom system or vegetation cutting tool with any objects, such as street signs, lampposts and trees. In case of a collision, the boom system may be subjected to a horizontal collision force of an equivalence of up to 1000 kg while the boom system is an extended position. The boom system is designed to handle such a large horizontal collision force, to ensure the boom system remains operational after such a collision. The booms of the boom system have a large enough section modulus in a horizontal direction to maintain an acceptable mechanical stress during a collision. The pivot pins that rotatably connect the booms to each other are dimensioned sufficiently large to withstand the torsion on the boom system caused by the collision. The boom system is typically subjected to a vertical force that is about the same or smaller than the maximum allowable horizontal collision force. The vertical force is determined for a large part by the weight of the vegetation cutting tool. The weight of the vegetation cutting tool is typically in the range of 400 - 800 kg.

A known boom system is disclosed in European patent application no EP1759571A1. The known boom system is mounted to the front side of a vehicle. A cutting tool is attached to the other end of the boom system. The boom system has multiple booms that are rotatable connected to each other. During operational use of the boom system, the boom system is extended sideways away from the vehicle. The orientation of the booms is set so as to avoid collisions, for example with a street sign. When the cutting tool is not used, the boom system is folded to store the vegetation cutting tool close to the vehicle. The vegetation cutting tool is stored either at the front side of the vehicle or on a platform at the back of the vehicle.

To increase the effective reach of the vegetation cutting tool, the boom system should be able to extend as far as possible. In an operational position, the boom system is preferably as large as possible. However, extending the booms of the known boom system would cause problems when the boom system is in a transport position. In the transport position, the boom system is folded to store the vegetation cutting tool close to or on the vehicle. In case the vegetation cutting tool is stored at the front of the vehicle, the extended booms would block part of the view of the driver, because the booms would extend in front of the front window of the vehicle, or would extend beyond the sides of the vehicle, making driving around more difficult. In case the vegetation cutting tool is stored at the back of the vehicle, space is consumed by the vegetation cutting tool and the boom system that would be preferably consumed by a collector unit that collects the vegetation that was cut by the vegetation cutting tool. When storing the vegetation cutting tool at the back of the vehicle, the collector unit needs to be placed on a trailer or on another vehicle.

A known boom system is disclosed in German Utility model DE 20003154U1, which discloses a boom system for holding a mowing head. The mowing head is provided with cutting, and is pivotable about a substantially vertical axis on a boom. A spacer is provided which extends from the pivot axis assigned to the boom to the mowing head. The fixing of the spacer on the mowing head is arranged downstream of the pivot axis in the direction of travel.

It is an objective of the invention to provide a boom system with a large reach in the operational position while consuming as little space as possible in the transport position.

The objective of the invention is achieved by a boom system for moving a vegetation cutting tool relative to a vehicle and supporting the vegetation cutting tool during operation thereof. The boom system comprises a first boom, a second boom, a third boom and a fourth boom, a base and an actuator system. The base comprises a connector adapted to connect the boom system to the vehicle. The actuator system comprises a boom actuator. The first boom is connected to the base. The second boom has a longitudinal axis and is rotatably connected to the first boom. The third boom has a longitudinal axis and is rotatably connected to the second boom. The fourth boom is rotatably connected to the third boom. The fourth boom is connectable to the vegetation cutting tool. The actuator system is adapted to rotate the third boom along a rotation axis relative to the second boom along a range of motion from a first angular position to a second angular position. The range of motion includes a first intermediate position, a second intermediate position and a third intermediate position. In the first intermediate position, the longitudinal axis of the second boom and the longitudinal axis of the third boom are parallel to each other. The boom actuator is arranged to rotate the third boom relative to the second boom from the first angular position to the second intermediate position, and from the third intermediate position to the second angular position. An actuation direction of the boom actuator is directed through the rotation axis between the second intermediate position and the third intermediate position. The actuator system is configured to disable the boom actuator to allow the third boom to pass from the second intermediate position to the third intermediate position.

By moving the third boom along the range of motion, the longitudinal axes of the second boom and the third boom are at an angle relative to each other of less than 180° at the beginning of the range of motion and at an angle relative to each other of more than 180° at the end of the range of motion, or vice versa. This allows the second boom and the third boom to extend properly in the operational position to obtain a large effective range of the boom system, while the boom system can be folded compactly in the transport position. Because the boom system can be folded compactly in the transport position, the boom system can be mounted at the back of a vehicle while leaving enough space to also mount a collector unit at the back of the vehicle. This way, a single vehicle is able to cut and collect vegetation, without the need of a trailer. Alternatively, it is possible to use a smaller vehicle to carry the boom system according to the invention than a vehicle that would carry the known boom system.

The boom actuator is for example a hydraulic cylinder or an electric actuator that displaces the third boom relative to the second boom. Because the third boom and the second boom are rotatably connected to each other, this results in the third boom rotating relative to the second boom. When the boom actuator moves the third boom relative to the second boom from the first angular position to the second intermediate position, the orientation of the boom actuator changes relative to the second boom and/or third boom. At the second intermediate position, the orientation of the boom actuator relative to the second boom and/or third boom causes an actuation direction of the boom actuator to be directed almost through the rotation axis of the joint between the second boom and the third boom. As a result, the force provided by the boom actuator does not or does not substantially cause any further rotation of the third boom relative to the second boom. However, the stress on the joint between the third boom and the second boom becomes increasingly larger. Similarly, when the boom actuator moves the third boom relative to the second boom from the second angular position to the third intermediate position, the orientation of the boom actuator changes relative to the second boom and/or third boom. At the third intermediate position, the orientation of the boom actuator relative to the second boom and/or third boom causes the actuation direction of the boom actuator to be directed almost through the rotation axis of the joint between the second boom and the third boom. As a result, the force provided by the boom actuator does not or does not substantially cause any further rotation of the third boom relative to the second boom. Instead, the stress on the joint between the third boom and the second boom becomes increasingly larger. The angular positions between the second intermediate position and the third intermediate positions are positions at which the boom actuator is unable to change the rotational position of the third boom relative to the second boom. The actuation direction of the boom actuator is directed through the rotation axis between the second intermediate position and the third intermediate position. This means that the actuation direction of the boom actuator is directed through the rotation axis at a rotational position of the third boom relative to the second boom between the second intermediate position and the third intermediate position. The angular positions between the second intermediate position and the third intermediate positions may be referred to as a dead zone. While in the second boom and the third boom are in the dead zone, the actuator system disables the boom actuator. When disabled, the boom actuator does not control the angle between the second boom and the third boom. Because the boom actuator does not control the angle between the second boom and the third boom, another force applied to the second boom and/or third boom is able to change the angle between the second boom and the third boom. This other force changes the angle of the third boom relative to the second boom until the angle is outside the dead zone. When the angular position is back in the range between the first angular position and the second intermediate position, or between the second angular position and the third intermediate position, the boom actuator is enabled again by the actuator system. When the boom actuator is enabled again, the angle between the second boom and the third boom is controlled by the boom actuator. For example, the boom actuator is in a free-flow mode when disabled. In the free-flow mode, the boom actuator extends or shortens in response to a small external force applied to the boom actuator. In comparison, when enabled, the boom actuator is able to maintain a certain amount of extension even when a large external force is applied to the boom actuator. For example, the large external force is 10 times or 50 times or 100 times larger than the small external force.

The vegetation cutting tool is for example a mower or a mowing bucket for mowing grass or comparable vegetation. The vegetation cutting tool is for example a hedge trimmer. The hedge trimmer is able to cut vertically to cut the vertical sides of a hedge. The hedge trimmer is rotatably connected to the fourth boom. The actuator system has, for example, an actuator to rotate the hedge trimmer relative to the fourth boom to change the cutting direction of the hedge trimmer from horizontal to vertical and vice versa. The vegetation cutting tool is for example a stump cutter. After cutting down a tree, a stump remains. The stump cutter can be used to cut the remaining stump and part of the tree roots. The boom system allows the stump cutter to reach stumps at locations that are difficult to reach with the vehicle.

The vehicle is for example a truck or a tractor. The vehicle is for example provided with a four-wheel or all-wheel drive to drive through difficult terrain. The vehicle has for example tires or tracks. The vehicle is for example operated by a driver sitting on or in the vehicle. The vehicle is for example operated remotely by a driver that uses a remote controller. The vehicle is for example operated by a computer system that uses sensor input to drive the vehicle. The sensor input may include GPS-data, terrain data, data from sensors that detect objects near the vehicle, and/or visual data.

The first boom, second boom, third boom and fourth boom are further also referred to as 'the booms'. The booms are elongated beams or tubes, each extending along a longitudinal axis. The booms all have the same length, some booms have the same length or none of the booms have the same length. For example, each boom has a length in the range of 0.5 m - 3.0 m, for example in the range of 1.8 - 2.5 m.

The base is for example provided with a bearing to connect the first boom to the base. The bearing allows the first boom to rotate relative to the base along a vertical axis. This allows the vegetation cutting tool to make a circular horizontal movement relative to the base. By extending the boom system sideways away from the vehicle and by then rotating the first boom along the vertical axis relative to the base, the vegetation cutting tool can be moved towards the front of the vehicle. In case the driver's seat is at the front of the vehicle, the vegetation cutting tool can be moved next to the driver's seat, so the driver has a good view on the vegetation cutting tool. For example, the first boom is able to rotate along the vertical axis relative to the base with an angle of 180° or 270° or 360°. The base is for example provided with a bearing to connect the first boom to the base rotatably along a horizontal axis. By rotating the first boom via the bearing along the horizontal axis, the first boom is rotatable in a vertical plane, for example from a horizontal position to a vertical position. The first boom is for example rotatable along the horizontal axis relative to the base with an angle of 45° or 60° or 90°. In an example, the first boom is rigidly connected to the base. The base comprises a connector that is adapted to connect the boom system to the vehicle. For example, the connector comprises a mounting plate with holes. The mounting plate is bolted to the vehicle by inserting bolts through the holes in the mounting plate. In another example, the connector comprise parts that are welded to the vehicle.

One end of the first boom along the longitudinal direction of the first boom is connected to the base. The other end of the first boom along the longitudinal direction of the first boom is connected to one end of the second boom. A joint between the first boom and the second boom connects the first boom and the second boom and is adapted to allow the first boom and the second boom to rotate relative to each other. The joint is arranged to allow the first boom and the second boom to rotate relative to each other along a rotation axis. The rotation axis is for example in a horizontal direction. The second boom is for example rotatable along the rotation axis relative to the first boom with an angle in the range of 60° - 170°, for example in the range of 90° - 135°.

The other end of the second boom along the longitudinal direction of the second boom is connected to one end of the third boom. A joint between the second boom and the third boom connects the second boom and the third boom and is adapted to allow the second boom and the third boom to rotate relative to each other. The joint is arranged to allow the second boom and the third boom to rotate relative to each other along a rotation axis. The rotation axis is for example in a horizontal direction.

The other end of the third boom along the longitudinal direction of the third boom is connected to one end of the fourth boom. A joint between the third boom and the fourth boom connects the third boom and the fourth boom and is adapted to allow the third boom and the fourth boom to rotate relative to each other. The joint is arranged to allow the third boom and the fourth boom to rotate relative to each other along a rotation axis. The rotation axis is for example in a horizontal direction. The fourth boom is for example rotatable along the rotation axis relative to the third boom with an angle in the range of 60° - 170°, for example in the range of 90° - 135°.

The rotation axes along which the second boom rotates relative to the first boom, the third boom rotates relative to the second boom, and the fourth boom rotates relative to the third boom are for example all parallel to each other. The rotation axes are for example all parallel in a horizontal direction. One or more of the rotation axes is for example rotatable relative to the horizontal plane, for example in case the first boom is adapted to rotate relative to the base along a horizontal axis that is non-parallel with one or more of the rotation axes.

The other end of the fourth boom is connectable to the vegetation cutting tool. For example, the other end of the fourth boom comprises a connector that is adapted to connect with a connector to the vegetation cutting tool. The connector on the fourth boom is for example adapted to connect with various types of vegetation cutting tools, so the boom system is useful for various types of vegetation maintenance. In an example, the connector of the fourth boom rotatably connects the vegetation cutting tool to the fourth boom. The vegetation cutting tool is for example rotatable relative to the fourth boom along one rotation axis, two rotation axes or three rotation axes.

In an example, the booms are aligned in a single plane, e.g., a vertical plane. The center lines of the booms are aligned along the single plane. In another example, the center lines of one or more booms are aligned along one plane, whereas the center lines of one or more other booms are aligned along another plane at an offset from the one plane. In this example, at least two boom are arranged at an offset to each other in a direction perpendicular to the longitudinal directions of the booms. For example, some the center lines of some booms are aligned along a first vertical plane, whereas the center lines of some other booms are aligned along a second vertical plane parallel to the first vertical plane.

The expression 'horizontal' is used in the text above is to indicate a horizontal orientation that occurs when the boom system is mounted to the vehicle and the vehicle is leveled on a horizontal plane. In case the vehicle would be standing on a sloop, the expression 'horizontal' indicates an orientation at an angle with the horizontal plane caused by the sloop on which the vehicle is standing. Similarly, the expression 'vertical' used to indicate a vertical orientation that occurs when the boom system is mounted to the vehicle and the vehicle is leveled on a horizontal plane. In case the vehicle would be standing on a sloop, the expression 'vertical' indicates an orientation perpendicular to the sloop the vehicle is standing on. The expressions 'horizontal' and 'vertical' are used to indicate directions that are perpendicular to each other.

The actuator system is adapted to rotate the third boom relative to the second boom along a range of motion from a first angular position to a second angular position. The first angular position marks, for example, one end of the range of motion, whereas the second angular position marks, for example, the other end of the range of motion. The actuator system is adapted to rotate the third boom relative to the second boom back and forth along the range of motion from the first angular position to the second angular position.

The range of motion includes a first intermediate position. In the first intermediate position, the third boom is in a rotational position relative to the second boom, such that the longitudinal direction of the second boom and the longitudinal direction of the third boom are parallel to each other. In the first intermediate position, the joint connecting the first boom to the second boom, and the joint connecting the third boom to the fourth boom are at the largest possible distance from each other. Rotating the third boom relative to the second boom from the intermediate position to either the first angular position or the second angular position, reduces the distance between the joint connecting the first boom to the second boom, and the joint connecting the third boom to the fourth boom. In an example, the second boom and the third boom are collinear when the longitudinal direction of the second boom and the longitudinal direction of the third boom are parallel to each other. In another example, the longitudinal directions of the second boom and the third boom extend at an offset from each other, when the longitudinal direction of the second boom and the longitudinal direction of the third boom are parallel to each other

It is helpful to rotate the third boom to the first intermediate position in the operational position when the vegetation cutting tool is being operated. When the third boom is in the first intermediate position, the vegetation cutting tool can achieve a position that is farthest from the vehicle. However, it is often desired to also cut vegetation more closely to the vehicle. Therefore, during operational use, the angle between the second boom and the third boom is varied between the first intermediate position and the second angular position. The first intermediate position is used to reach vegetation far away from the vehicle, whereas the second angular position is used to reach vegetation near the vehicle. To cut vegetation in between, the angle between the second boom and the third boom is changed between the intermediate position and the second angular position. Even though, in the second angular position, the boom system holds the vegetation cutting tool near the vehicle, the boom system consumes a large space. For example, some booms extend above the top of the vehicle or beyond the side of the vehicle to arrange the booms in a way that allows the vegetation cutting tool to be near the vehicle. So when in the second angular position, the booms are not arranged to consume the least amount of space. By moving the third boom relative to the second boom to the first angular position, the booms can be arranged to consume the least amount of space. By rotating the third boom relative to the second boom from the first intermediate position towards the first angular position, the third boom is folded relative to the second boom in the opposite position compared to when the third boom is rotated relative to the second boom from the first intermediate position to the second angular position. By folding the third boom in the opposite position, a first lateral side of the third boom faces a lateral side of the second boom, while a second lateral side of the third boom, which is opposite to the first lateral side of the third boom, faces away from the first boom. By folding the third boom in the opposite position, the booms can be arranged closely together, so the consumed space is reduced.

In an embodiment, the boom actuator is a linear actuator connected to the second boom and connected to the third boom.

According to this embodiment, the boom actuator is a linear actuator. One end of the linear actuator is connected to the second boom, whereas another end of the linear actuator is connected to the third boom.

In an embodiment, the actuator system comprises a further actuator arranged to rotate the third boom relative to the second boom from the second intermediate position to the third intermediate position when the boom actuator is disabled.

According to this embodiment, a further actuator is arranged to change the rotation between the second boom and the third boom while the second boom and the third boom are in the dead zone, and the boom actuator is disabled. For example, the actuator system actuates the booms to place the vegetation cutting tool or the fourth boom on the ground. In this scenario, the boom system is supported via the base and via the ground. By operating the actuator system to rotate the second boom relative to the first boom and the actuator system to rotate the third boom relative to the fourth boom, the angular position of the third boom relative to the second boom is changed. For example, the actuator system sets the first boom and the fourth boom in a vertical position. By rotating the second boom relative to the first boom upward, and by rotating the third boom relative to the fourth boom upward, the joint between the second boom and the third boom is moved upward. As a result, the angle between the second boom and the third boom changes. When the third boom rotates relative to the second boom out of the dead zone, the boom actuator is enabled again. In case the second boom is rotated further upward relative to the first boom when the boom actuator is enabled again, the angle between the second boom and the third boom would not change. Instead, the fourth boom would be moved upward.

In an embodiment, the further actuator is arranged to rotate at least one of the first boom relative to the base, the second boom relative to the first boom, the fourth boom relative to the third boom, and the fourth boom relative to the vegetation cutting tool.

In an embodiment, the actuator system is adapted to position the second boom and/or the third boom to allow the third boom to pass from the second intermediate position to the third intermediate position under the influence of gravity.

According to this embodiment, the other force is at least partly caused by gravity. The other force is caused by the combined weight of the third boom, the fourth boom and the vegetation cutting tool. In case the vegetation cutting tool is not connected to the fourth boom, the combined weight is the weight of the third boom and the fourth boom. The combined weight creates a combined center of gravity. The actuator system orientates, for example, the second boom relative to the first boom such that when the third boom is in the dead zone, the combined center of gravity is at an offset in the horizontal direction away from the second boom. Because of the offset in the horizontal direction of the combined center of gravity, the combined weight causes a torque at the joint between the second boom and the third boom. This offset is in the horizontal direction independently of an orientation of the vehicle, because a torque is to be created using gravity. The torque changes the angle between the second boom and the third boom. If desired, the actuator system changes the orientation of the second boom relative to the first boom while the torque changes the angle between the second boom and the third boom to ensure the torque is properly maintained. When the third boom rotates relative to the second boom out of the dead zone, the boom actuator is enabled again. The torque caused by the combined weight may still be applied to the joint between the second boom and the third boom. However, the torque no longer causes a change in rotation between the second boom and the third boom, because the boom actuator is enabled again and thus the boom actuator controls the angle between the second boom and the third boom.

In an embodiment, the second boom is provided with a passage to accommodate at least a part of the actuator system.

According to the embodiment, the actuator system is a system comprising for example electric wires to transfer electric power, or hydraulics hoses to transfer hydraulic fluid. An electric actuator, for example, uses the electric power provided by the electric wire to rotate the second boom relative to the third boom along the range of motion. A hydraulic cylinder, for example, uses the hydraulic fluid provided by the hydraulics hose to rotate the second boom relative to the third boom along the range of motion. The actuator system is for example adapted to provide power to the vegetation cutting tool. Because the vegetation cutting tool is typically operated at a high power level to efficiently cut vegetation, the electric wire or the hydraulics hose providing the electric power or hydraulic power respectively to the vegetation cutting tool, has a large diameter. By providing the passage in the second boom, the electric wire or hydraulics hose is accommodated in the passage, which reduces the space the electric wire or hydraulics hose consumes outside the passage. Preferably, the passage is arranged near or at the neutral line or central line of the second boom. By arranging the passage near or at the neutral line or central line of the second boom, a decrease in bending stiffness of the second boom is minimized compared to a second boom without a passage. Alternatively or in addition, the passage in the second boom accommodates a valve and/or an actuator and/or any other part of the actuator system.

In an embodiment, the actuator system is or comprises a hydraulic system comprising a hydraulics hose for transfer of hydraulic fluid, wherein at least a part of the hydraulics hose is arranged in the passage of the second boom.

According to this embodiment, a hydraulic system is provided. Hydraulics systems have the advantage that they can provide a large force with relatively small actuators. For example, to match the force generated by a small hydraulic cylinder, a much larger electric actuator is required. In an example, a hydraulic cylinder is provided to rotate the third boom relative to the second boom. In addition or alternatively, for example, a hydraulic cylinder is provided to rotate the first boom relative to the base, a hydraulic cylinder is provided to rotate the second boom relative to the first boom, and/or a hydraulic cylinder is provided to rotate the fourth boom relative to the third boom. To provide any hydraulic cylinders on the third and fourth boom, and/or to provide hydraulic fluid to the vegetation cutting tool, at least part the hydraulics hose is for example arranged in the passage. Parts of multiple hydraulics hoses are for example arranged in the passage. Due to the required power, the hydraulic hose or hoses may have a large diameter. By arranging the hose or hoses partly in the passage, the space consumption outside the second boom is reduced.

In an embodiment, the second boom is rotatably connected to the third boom via a joint. The joint comprises two pivot pins coaxially aligned along a rotation axis with a space between the two pivot pins. The third boom is rotatable relative to the second boom about the rotation axis. The hydraulics hose extends through the space between the two pivot pins.

According to this embodiment, the joint allows the third boom to rotate relative to the second boom from the first angular position to the second angular position. When rotating the third boom relative to the second boom, the hydraulics hose extending from the second boom to the third boom has to follow the rotation. Due to the large diameter of the hydraulics hose, the hydraulics hose is not easily bend. By providing the hydraulics hose in the space between the pivot pins, the hydraulics hose is able to move along the space while the third boom rotates relative to the second boom. Depending on the angular position of the third boom relative to the second boom, the hydraulic hose is in the space at an offset relative to the rotation axis or through the rotation axis. By providing the hydraulics hose through the space between the pivot pins, the length of the hydraulics hose is minimized, because the hydraulics hose does not need to be bent around the joint. Also, because the hydraulics hose is able to move through the space between the pivot pens, the hydraulics hose is able to bend at a large radius when the third boom rotates relative to the second boom. Bending the hydraulics hose at a large radius is beneficial, because it is challenging to bend a hydraulics hose with a large diameter into a bend with a small radius. Similar to what is explained above, instead of a hydraulics hose, the actuator system comprises, for example, an electric wire or electric cable. To provide sufficient electric power, the electric wire or electric cable has a large diameter. By providing the electric wire or electric cable through the space between the pivot pens, the length of the electric wire or electric cable is minimized, and the electric wire or electric cable is bent at a large radius when the third boom rotates relative to the second boom.

In an embodiment, the hydraulic system comprises a distribution valve arranged at the third boom.

According to this embodiment, the distribution valve is arranged beyond the joint between the second boom and the third boom. This means that only one or a few hydraulics hoses pass through the joint between the second boom and the third boom. This allows easy bending of the one or the few hydraulics hoses passing through the joint when rotation the third boom relative to the second boom. At the distribution valve, the hydraulic fluid from the one or the few hydraulics hoses is distributed over further hydraulics hoses to provide further actuators with hydraulics fluid. The distribution valve at the third boom is especially beneficial in case many hydraulic functions are provided on the third boom, the fourth boom and/or the vegetation cutting tool, for example 4 or 5 or 6 or more functions. In case only a few hydraulic functions are provided, for example, only one to rotate the fourth boom and one to operate the vegetation cutting tool, the distribution valve may be omitted.

In an embodiment, the first intermediate position is between first angular position and the second intermediate position or between the second angular position and the third intermediate position.

According to this embodiment, the first intermediate position is outside the dead zone. At the first intermediate position, the longitudinal directions of the second boom and the third boom are parallel to each other. This means that the boom system is able to obtain a maximum reach of the boom system, while the boom actuator is enabled. So during operational use of the vegetation cutting tool, the boom actuator is able to control the rotation of the second boom relative to the third boom from near the vehicle to a position furthest away from the vehicle. For example, the first intermediate position is between the second angular position and the third intermediate position.

In an embodiment, the boom system is adapted to change between a transport position and an operational position. In the transport position, the vegetation cutting tool is arranged for transport with the vehicle. In the operational position, the vegetation cutting tool is arranged for operational use. The third boom is in the first angular position in the transport position. The third boom is in the second angular position in the operational position.

According to this embodiment, the third boom is in the first angular position relative to the second boom, when the boom system is in the transport position. In the transport position, the boom system is stored on the vehicle while consuming as little space as possible. For example, in the transport position, the boom system does not extend or extends only a very small amount beyond the top of the vehicle or beyond the sides of the vehicle. The vehicle is able to drive along with other traffic in a normal way when the boom system is in the transport position. For example, when the boom system is in the transport position, the vehicle is able to drive through streets, pass through tunnels, and drive under overpasses in the same way the vehicle would be able to do in case no boom system would be mounted on the vehicle. This allows the vehicle to quickly reach the location at which vegetation maintenance is desired. When arriving at the location at which vegetation maintenance is desired, the boom system is set to the operational position, in which the third boom is set in the second angular position. In the operational position, the boom system holds the vegetation cutting tool at a side of the vehicle to reach the vegetation to be cut.

In an embodiment, the boom system comprises a collector tube arranged to collect vegetation at the vegetation cutting tool during operational use thereof. The collector tube extends along the longitudinal direction of the second boom and the longitudinal direction of the third boom.

According to the embodiment, the collector tube collects the vegetation that is cut by the vegetation cutting tool. By arranging the collector tube along the longitudinal direction of the second boom and the longitudinal direction of the third boom, the collector tube is able to collect the cut vegetation near the vegetation cutting tool, while minimizing the risk that the collector tube gets collides with an object. Because the collector tube extends along the longitudinal direction of the second boom and the longitudinal direction of the third boom, the driver of the vehicle only needs to make sure the boom system does not collide with any object. By doing so, also the collector tube does not collide with any objection. The collector tube is for example provided with an air pump to suck the cut vegetation into the collector pump. The collector tube for example transfers the cut vegetation to a collector unit. The collector unit is for example arranged on the vehicle or is for example on a trailer behind the vehicle.

In an embodiment, the collector tube is configured to rotate along with the third boom along the range of motion.

According to the embodiment, the collector tube is made flexible or rotatable at the joint between the second boom and the third boom. This way the collector tube is able to move along with the third boom and the second boom along the range of motion.

In a further aspect of the invention, there is provided a vehicle comprising the boom system as described above.

In yet another aspect of the invention, there is provided a method for cutting vegetation using a vegetation cutting tool attached to a boom system, the boom system comprising a first boom, a second boom, a third boom and a fourth boom. The first boom is rotatably connected to a base. The second boom has a longitudinal axis and is rotatably connected to the first boom. The third boom has a longitudinal axis and is rotatably connected to the second boom. The fourth boom is rotatably connected to the third boom. The fourth boom is connected to the vegetation cutting tool. The method comprises rotating the third boom relative to the second boom along a range of motion from a first angular position to a second angular position. The range of motion includes a first intermediate position in which the longitudinal axis of the second boom and the longitudinal axis of the third boom are parallel to each other.

In an embodiment, the method comprises rotating the third boom relative to the second boom from the first angular position to a second intermediate position and from a third intermediate position to the second position, and using gravity to rotate the third boom from the second intermediate position to the third intermediate position.

In an embodiment, there is provided a boom system for moving a vegetation cutting tool relative to a vehicle and supporting the vegetation cutting tool during operation thereof. The boom system comprises a first boom, a second boom, a third boom and a fourth boom, a base and an actuator system. The base comprises a connector adapted to connect the boom system to the vehicle. The first boom is connected to the base, optionally rotatably connected to the base. The second boom has a longitudinal axis and is rotatably connected to the first boom. The third boom has a longitudinal axis and is rotatably connected to the second boom. The fourth boom is rotatably connected to the third boom. The fourth boom is connectable to the vegetation cutting tool. The third boom is rotatable relative to the second boom along a range of motion by the actuator system from a first angular position to a second angular position. The range of motion includes a first intermediate position in which the longitudinal axis of the second boom and the longitudinal axis of the third boom are parallel to each other. The second boom is provided with a passage to accommodate at least a part of the actuator system. The actuator system is or comprises a hydraulic system comprising a hydraulics hose for transfer of hydraulic fluid. At least a part of the hydraulics hose is arranged in the passage of the second boom. The second boom is rotatably connected to the third boom via a joint. The joint comprises two pivot pins coaxially aligned along a rotation axis with a space between the two pivot pins. The third boom is rotatable relative to the second boom about the rotation axis. The hydraulics hose extends through the space between the two pivot pins.

In an embodiment, there is provided a boom system for moving a vegetation cutting tool relative to a vehicle and supporting the vegetation cutting tool during operation thereof. The boom system comprises a first boom, a second boom, a third boom and a fourth boom, a base and an actuator system. The base comprises a connector adapted to connect the boom system to the vehicle. The first boom is connected to the base, optionally rotatably connected to the base. The second boom has a longitudinal axis and is rotatably connected to the first boom. The third boom has a longitudinal axis and is rotatably connected to the second boom. The fourth boom is rotatably connected to the third boom. The fourth boom is connectable to the vegetation cutting tool. The third boom is rotatable relative to the second boom along a range of motion by the actuator system from a first angular position to a second angular position. The range of motion includes a first intermediate position in which the longitudinal axis of the second boom and the longitudinal axis of the third boom are parallel to each other. The actuator system comprises a boom actuator arranged to rotate the third boom relative to the second boom from the first angular position to a second intermediate position and from a third intermediate position to the second angular position. The actuator system is configured to disable the boom actuator to allow the third boom to pass from the second intermediate position to the third intermediate position. The actuator system comprises a further actuator arranged to rotate the third boom relative to the second boom from the second intermediate position to the third intermediate position when the boom actuator is disabled. Optionally, the further actuator is arranged to rotate at least one of the first boom relative to the base, the second boom relative to the first boom, the fourth boom relative to the third boom, and the fourth boom relative to the vegetation cutting tool.

The invention will be described in more detail below under reference to the figures, in which in a non-limiting manner exemplary embodiments of the invention will be shown. The figures show in:
Fig. 1: a vehicle with a boom system according to an embodiment of the invention.
Fig. 2: the vehicle with the boom system of Fig. 1 with the boom system in different position.
Figs 3-6: a detail of the boom system according to an embodiment of the invention in various positions.
Fig. 7: a further detail of the boom system according to an embodiment of the invention in various positions.
Fig. 8: the boom system according to another embodiment of the invention.
Fig. 9: a detail of the boom system according to yet another embodiment of the invention.
Figs. 10-12: the embodiment of Fig. 9 in various positions.

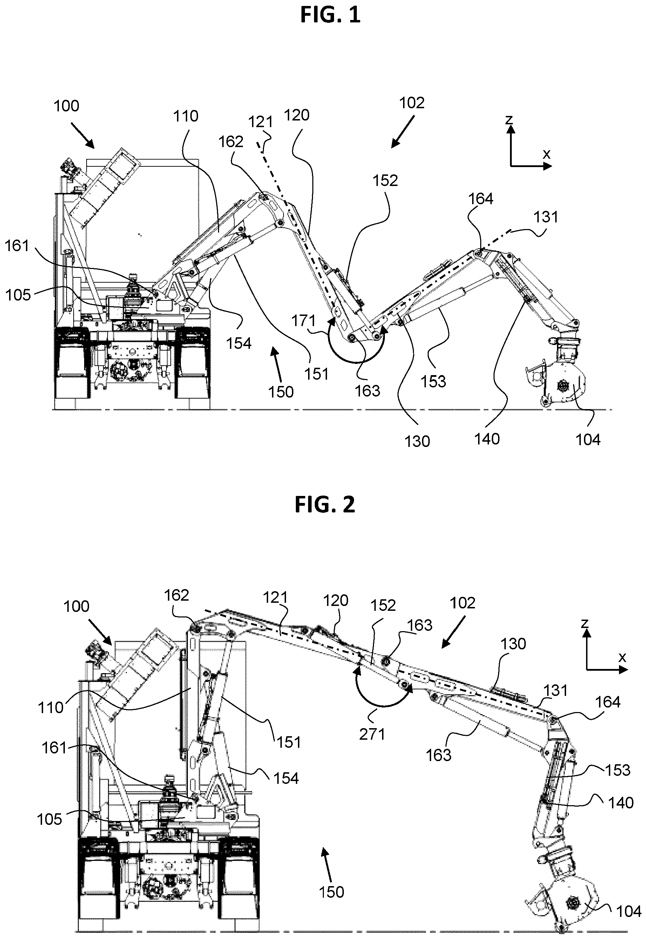

Fig.1 shows a rear view of a vehicle 100 with a boom system 102 for moving a vegetation cutting tool 104 relative to a vehicle 100 and supporting the vegetation cutting tool 104 during operation thereof. The boom system 102 comprises a first boom 110, a second boom 120, a third boom 130 and a fourth boom 140. The boom system 102 comprises a base 105 and an actuator system 150. The base 105 has a connector that is adapted to connect the boom system 102 to the vehicle 100. The first boom 110 is rotatably connected to the base 105 via a first joint 161. The second boom 120 has a longitudinal axis 121 and is rotatably connected to the first boom 110 via a second joint 162. The third boom 130 has a longitudinal axis 131 and is rotatably connected to the second boom 120 via a third joint 163. The fourth boom 140 is rotatably connected to the third boom 130 via a fourth joint 164. The fourth boom 140 is connectable to the vegetation cutting tool 104.

The third boom 130 is rotatable relative to the second boom 120 along a range of motion by the actuator system 150 from a first angular position 171 to a second angular position. The range of motion includes a first intermediate position in which the longitudinal axis of the second boom 120 and the longitudinal axis of the third boom 130 are parallel to each other.

The actuator system 150 is or comprises a hydraulic system comprising a hydraulics hose for transfer of hydraulic fluid. The hydraulic system comprises a first boom actuator 151, a second boom actuator 152, a third boom actuator 153 and a base actuator 154. The first boom actuator 151 is connected to the first boom 110 and to the second boom 120 to rotate the first boom 110 relative to the base 105. The second boom actuator 152 is connected to the second boom 120 and to the third boom 130 to rotate the second boom 120 relative to the third boom 130. The third boom actuator 153 is connected to the third boom 130 and to the fourth boom 140 to rotate the fourth boom 140 relative to the third boom 130. The base actuator 154 is connected to the base 105 and to the first boom 110 to rotate the first boom 110 relative to the base 105.

Fig. 1 shows the third boom 130 relative to the second boom 120 in a position in the first angular position 171. In the first angular position 171, the angle between the longitudinal axis 131 of the third boom 130 and the longitudinal axis 121 of the second boom 120 are at an angle of about 275°. In this embodiment, the angle is defined such that the first angular position 171 is in the range between 180° and 360°, excluding 180°. This angle is defined from the bottom lateral surface of the second boom 120 to the bottom lateral surface of the third boom 130 when the boom system 102 is in the orientation as disclosed in Fig. 1.

Fig. 2 shows the third boom 130 relative to the second boom 120 in a position in the first intermediate position 271, in which the longitudinal axis 121 of the second boom 120 and the longitudinal axis 131 of the third boom 130 are parallel to each other. When in the first intermediate position 271, the longitudinal axis 121 of the second boom 120 and the longitudinal direction 131 of the third boom 130 are at an angle of 180° relative to each other. The longitudinal axis 121 of the second boom 120 and the longitudinal direction 131 of the third boom 130 are for example aligned with each other or at an offset with each other. Also shown in Fig. 2 is that the base actuator 154 has rotated the first boom 110 in a vertical position. When the third boom 130 rotates relative to the second boom 120 from the first intermediate position 271 to the second angular position, the angle between the longitudinal axis 121 of the second boom 120 and the longitudinal direction 131 of the third boom 130 becomes smaller than 180°. In the orientation of the booms as disclosed in Fig. 2, this would cause the third joint 163 to move upward in the z-direction and would cause the vegetation cutting tool 104 to move towards the vehicle 100, assuming the vegetation cutting tool 104 remains at the same z-position at the ground level.

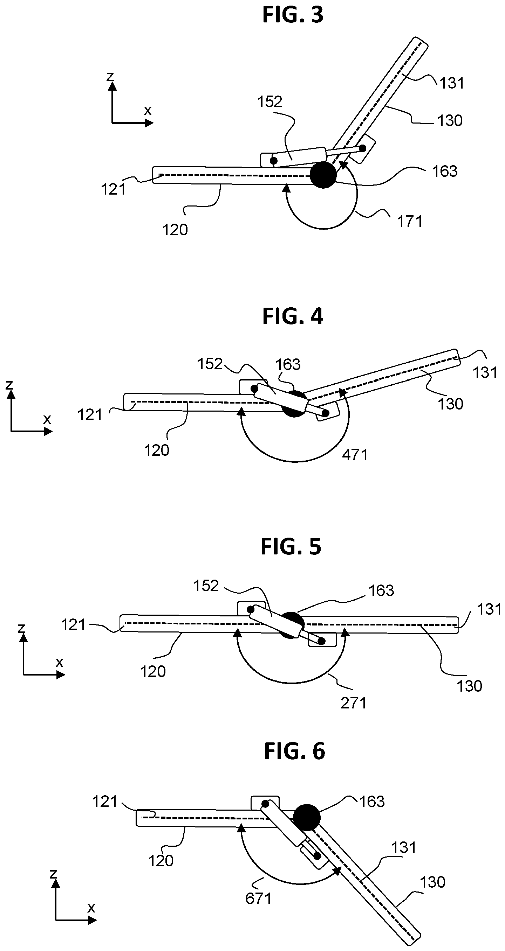

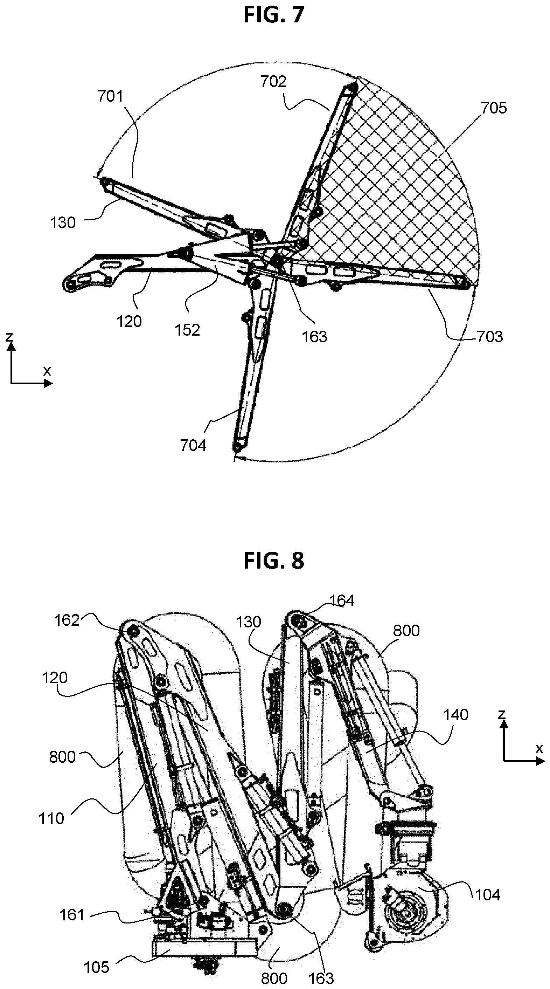

Figs 3-6 depict schematically the second boom 120 and the third boom 130 in various angles relative to each other. In Fig. 3, the second boom actuator 152 has rotated the third boom 130 relative to the second boom 120 along the third joint 163 in the first angular position 171. In the first angular position 171, the angle between the longitudinal direction 121 of the second boom 120 and the longitudinal direction 131 of the third boom 130 is larger than 180° for example 275°. The second boom actuator 152 is for example a hydraulic cylinder adapted to extend and retract along a longitudinal direction of the second boom actuator 152. When the second boom actuator 152 retracts when the third boom 130 is in the first angular position 171 relative to the second boom 120, the angle between the third boom 130 and the second boom 120 changes until the situation in Fig. 4 is reached. In the situation of Fig. 4, the longitudinal direction of the second boom actuator 152, i.e., the actuation direction of the second boom actuator 152, is directed through the third joint 163. As a result, the second boom 120 is unable to provide sufficient torque about the third joint 162 to rotate the third boom 130 further. The third boom 130 is now in the dead zone between the second intermediate position and the third intermediate position. Although Fig 4 shows the third boom 130 in the dead zone when the longitudinal direction of the second boom actuator 152 directed exactly through the third joint 163, the dead zone already begins when there is still a small offset between the longitudinal direction of the second boom actuator 152 and the third joint 163. Because the second boom actuator 152 is a linear actuator, the second boom actuator 152 needs a sufficiently large offset between the longitudinal direction of the second boom actuator 152 and the third joint 163 to create sufficient torque to rotate the third boom 130 relative to the second boom 120. This is further explained in Fig. 7.

Fig. 7 shows the second boom 120 and the third boom 130 in various angles relative to each other. These various angles do not occur simultaneously, but at different moments in time. The first angle 701 depicts the first angular position 171. The second boom actuator 152 is in a retracted position. Extending the second boom actuator 152 rotates the third boom 130 to the second angle 702, which is the second intermediate position. As shown in Fig. 7, the longitudinal direction of the second boom actuator 152 is only at a small offset from the third joint 163. As a result, the second boom actuator 152 is not able to provide enough torque to rotate the third boom 130 any further. At the second intermediate position, the second boom actuator 152 is disabled. The third boom 130 is rotated through the dead zone 705 under the influence of gravity and/or by using one or more of the other boom actuators 151, 153 and/or the base actuator 154. At the third angle 703, the third boom 130 has rotated to the extent that the offset between the longitudinal direction of the second boom actuator 152 and the third joint 163 has become large enough to again provide sufficient torque to rotate the third boom 130 relative to the second boom 120. So the third angle 703 is at the third intermediate position. At the third intermediate position, the second boom actuator 152 is enabled again by the actuator system. The second boom actuator 152 rotates the third boom 130 further to the fourth angle 704. The fourth angle 704 is at the second angular position. Preferably, the first intermediate position 271 at which the longitudinal axes of the second boom 120 and the third boom 130 are parallel to each other is between the third angle 703 and the fourth angle 704, i.e., between the third intermediate position and the second angular position.

The dead zone may extend over an angle of 5°, or 10° or 15° or 30°. Preferably, the second boom actuator 152 is a small actuator to reduce the weight and the costs of the boom system 102. However, a small actuator only provides a small force. The small force requires a large offset between the longitudinal direction of the second boom actuator 152 and the third joint 163 to generate sufficient torque. As a result, using a small actuator may lead to a large dead zone. In comparison, using a large actuator that can provide a large force, requires less offset between the longitudinal direction of the second boom actuator 152 and the third joint 163 to generate sufficient torque. As a result, using a large actuator may lead to a small dead zone. Other factors, such as the maximum desired mechanical stress on the third joint 163 or mechanical play between various components of the boom system 102 may determine the size of the dead zone.

Fig. 5 schematically shows the first intermediate position 271 at which the longitudinal axes of the second boom 120 and the third boom 130 are parallel to each other. This is the same first intermediate position 271 as shown in Fig. 2. Fig. 6 shows that the third boom 130 has been rotated further relative to the second boom 120 to the second angular position 671.

Fig. 8 depicts an embodiment of the boom system 102 in a transport position. In the transport position, the third boom 130 is in the first angular position 171 relative to the second boom 120. This allows the booms to be folded closely together to consume the least amount of space. By folding the booms in this way, the first boom 110 and the second boom 120 are folded together as closely together, without any other boom between the first boom 110 and the second boom 120. The second boom 120 and the third boom 130 are folded together as closely together, without any other boom between the second boom 120 and the third boom 130. The third boom 130 and the fourth boom 140 are folded together as closely together, without any other boom between the third boom 130 and the fourth boom 140.

Fig. 8 also shows that the boom system 102 is provided with a collector tube 800. Various parts of the collector tube 800 are indicated with the reference sign 800. The collector tube 800 starts near the vegetation cutting tool 104 to collect the cut vegetation. The collector tube 800 extends along the fourth boom 140, the third boom 130, the second boom 120 towards the base 105. The collector tube 800 is made flexible to rotate along with the second joint 162, third joint 163 and fourth joint 164. The collector tube 800 is coupled to a pump to provide suction to such cut vegetation in and through the collector tube 800.

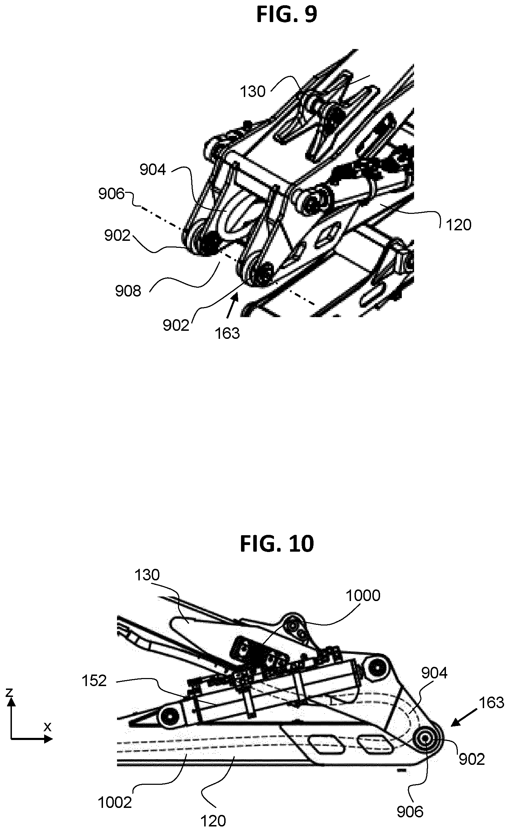

Fig. 9 shows a detail of the boom system 102 according to the invention. The second boom 120 is rotatably connected to the third boom 130 via the third joint 163. The third joint 163 comprises two pivot pins 902 coaxially aligned along a rotation axis 906 with a space 908 between the two pivot pins 902. The third boom 130 is rotatable relative to the second boom 120 about the rotation axis 906. The hydraulics hose 904 extends through the space 908 between the two pivot pins 902. Alternatively or in addition, the actuator system 150 comprises an electric wire or an electric cable that extends through the space 908.

Figs. 10-12 depict how the hydraulics hose 904 is able to move through the space 908 between the pivot pins 902 when rotating the third boom 130 relative to the second boom 120.

Fig. 10 depicts the third boom 130 in the first angular position 171 relative to the second boom 120. The hydraulics hose 904 is accommodated by a passage 1002 in the second boom 120 to lead the hydraulics hose 904 to the space 908 between the pivot pins 902. The hydraulics hose 904 provides hydraulic fluid to the distribution valve 1000 arranged on the third boom 130. Because of the angle between the third boom 130 and the second boom 120 in the first angular position 171, the hydraulics hose 904 is bent towards the left side of the figure. Due to the stiffness of the hydraulics hose 904, the hydraulics hose 904 is bent with a radius. Because some length of the hydraulics hose 904 is needed to form the bend with the radius, the hydraulics hose 904 is not able to reach the rotation axis 906. Instead, the hydraulics hose 904 remains at a left upper side of the rotation axis 906. Because of the space 908 between the pivot pins 902, the hydraulics hose 904 is able to be left of the rotation axis 906.

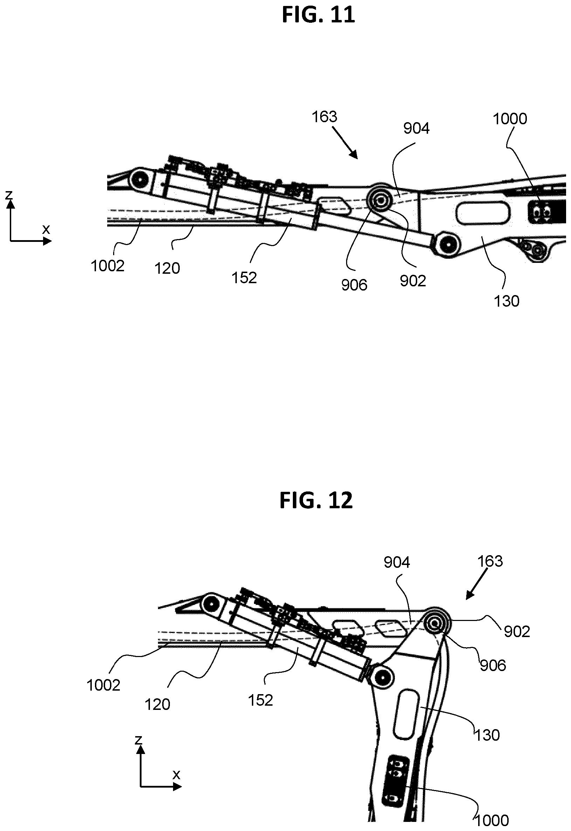

Fig. 11 depicts the third boom 130 in the first intermediate position 271 relative to the second boom 120. The longitudinal axes of the second boom 120 and the third boom 130 are parallel to each other. In this position, the hydraulics hose 904 passes through the passage via the space 908 between the pivot pins 902 to the third boom 130 in substantially a straight line. The hydraulics hose passes through the rotation axis 906.

Fig. 12 depicts the third boom 130 in the second angular relative to the second boom 120. In this position, the hydraulics hose 904 passes through the passage via the space 908 between the pivot pins 902 to the third boom 130, wherein the hydraulics hose 904 is bent downward towards the third boom 130. The hydraulics hose 904 is bent into a bend with a radius, similar to Fig 10 but in an opposite direction. The radius of the bend in Fig. 10 is the same or is different from the radius of the bend in Fig. 12. Because some length of the hydraulics hose 904 is needed to form the bend with the radius, the hydraulics hose 904 is not able to reach the rotation axis 906. Instead, the hydraulics hose 904 passes the rotation axis 906 at the left lower side. Because of the space 908 between the pivot pins 902, the hydraulics hose 904 is able to pass the rotation axis 906 at the left lower side. So by providing the space 908 between the pivot pins 902, the hydraulics hose 904 has room to move and bend in an area at an near the rotation axis 906.

As required, this document describes detailed embodiments of the present invention. However it must be understood that the disclosed embodiments serve exclusively as examples, and that the invention may also be implemented in other forms. Therefore specific constructional aspects which are disclosed herein should not be regarded as restrictive for the invention, but merely as a basis for the claims and as a basis for rendering the invention implementable by the average skilled person.

Furthermore, the various terms used in the description should not be interpreted as restrictive but rather as a comprehensive explanation of the invention.

The word "a" used herein means one or more than one, unless specified otherwise. The phrase "a plurality of" means two or more than two. The words "comprising" and "having" are constitute open language and do not exclude the presence of more elements.

Reference figures in the claims should not be interpreted as restrictive of the invention. Particular embodiments need not achieve all objects described.

The mere fact that certain technical measures are specified in different dependent claims still allows the possibility that a combination of these technical measures may advantageously be applied.

## Claims

1. Boom system (102) for moving a vegetation cutting tool (104) relative to a vehicle (100) and supporting the vegetation cutting tool (104) during operation thereof, the boom system (102) comprising:
a first boom (110), a second boom (120), a third boom (130) and a fourth boom (140); a base (105) comprising a connector adapted to connect the boom system (102) to the vehicle (100); and
an actuator system (150) comprising a boom actuator (152)
wherein the first boom (110) is connected to the base (105),
wherein the second boom (120) has a longitudinal axis (121) and is rotatably connected to the first boom (110),
wherein the third boom (130) has a longitudinal axis (131) and is rotatably connected to the second boom (120),
wherein the fourth boom (140) is rotatably connected to the third boom (130),
wherein the fourth boom (140) is connectable to the vegetation cutting tool (104),
wherein the actuator system (150) is adapted to rotate the third boom (130) along a rotation axis (906) relative to the second boom (120) along a range of motion from a first angular position (171) to a second angular position (671),
wherein the range of motion includes a first intermediate position (271), a second intermediate position (702) and a third intermediate position (703),
wherein, in the first intermediate position (271), the longitudinal axis (121) of the second boom (120) and the longitudinal axis (131) of the third boom (130) are parallel to each other,
wherein the boom actuator (152) is arranged to rotate the third boom (130) relative to the second boom (120) from the first angular position (171) to the second intermediate position (702), and from the third intermediate position (703) to the second angular position (671), **characterized in that**,
an actuation direction of the boom actuator (152) is directed through the rotation axis (906) between the second intermediate position and the third intermediate position,
wherein the actuator system (150) is configured to disable the boom actuator (152) to allow the third boom (130) to pass from the second intermediate position (702) to the third intermediate position (703).

2. Boom system (102) according to claim 1, wherein the boom actuator (152) is a linear actuator connected to the second boom (120) and connected to the third boom (130).

3. Boom system (102) according to any one of the preceding claims, wherein the actuator system (150) comprises a further actuator arranged to rotate the third boom (130) relative to the second boom (120) from the second intermediate position (702) to the third intermediate position (703) when the boom actuator (152) is disabled.

4. Boom system (102) according to claim 3, wherein the further actuator is arranged to rotate at least one of the first boom (110) relative to the base (105), the second boom (120) relative to the first boom (110), the fourth boom (140) relative to the third boom (130), and the fourth boom (140) relative to the vegetation cutting tool (104).

5. Boom system (102) according to any one of the preceding claims, wherein the actuator system (150) is adapted to position the second boom (120) and/or the third boom (130) to allow the third boom (130) to pass from the second intermediate position (702) to the third intermediate position (703) under the influence of gravity.

6. Boom system (102) according to any one of the preceding claims,
wherein the second boom (120) is provided with a passage (1002) to accommodate at least a part of the actuator system (150).

7. Boom system (102) according to claim 6,
wherein the actuator system (150) is or comprises a hydraulic system comprising a hydraulics hose (904) for transfer of hydraulic fluid, wherein at least a part of the hydraulics hose (904) is arranged in the passage (1002) of the second boom (120).

8. Boom system (102) according to claim 7, wherein the second boom (120) is rotatably connected to the third boom (130) via a joint (163), wherein the joint (163) comprises two pivot pins (902) coaxially aligned along the rotation axis (906) with a space (908) between the two pivot pins (902), wherein the hydraulics hose (904) extends through the space (908) between the two pivot pins (902).

9. Boom system (102) according to any one of claim 7 or 8, wherein the hydraulic system comprises a distribution valve (1000) arranged at the third boom (130).

10. Boom system (102) according to any one of the preceding claims, wherein the first intermediate position (271) is between first angular position (171) and the second intermediate position (702) or between the second angular position (671) and the third intermediate position (703).

11. Boom system (102) according to any of the preceding claims, adapted to change between a transport position and an operational position,
wherein, in the transport position, the vegetation cutting tool (104) is arranged for transport with the vehicle (100), and,
wherein, in the operational position, the vegetation cutting tool (104) is arranged for operational use,
wherein the third boom (130) is in the first angular position (171) in the transport position,
wherein the third boom (130) is in the second angular position (671) in the operational position.

12. Boom system (102) according to any one of the preceding claims, comprising a collector tube (800) arranged to collect vegetation at the vegetation cutting tool (104) during operational use thereof, wherein the collector tube (800) extends along the longitudinal direction (121) of the second boom (120) and the longitudinal direction (131) of the third boom (130), wherein preferably, the collector tube (800) is configured to rotate along with the third boom (130) along the range of motion.

13. Vehicle (100) comprising the boom system (102) according to any one of the preceding claims.

14. A method for cutting vegetation using a vegetation cutting tool (104) attached to a boom system (102), the boom system (102) comprising:
a first boom (110), a second boom (120), a third boom (130) and a fourth boom (140) and a boom actuator (152), and
wherein the first boom (110) is connected to a base (105),
wherein the second boom (120) has a longitudinal axis (121) and is rotatably connected to the first boom (110),
wherein the third boom (130) has a longitudinal axis (131) and is rotatably connected to the second boom (120),
wherein the fourth boom (140) is rotatably connected to the third boom (130),
wherein the fourth boom (140) is connected to the vegetation cutting tool (104),
the method comprises:
rotating the third boom (130) along a rotation axis (906) relative to the second boom (120) along a range of motion from a first angular position (171) to a second angular position (671),
wherein the range of motion includes a first intermediate position (271), a second intermediate position (702) and a third intermediate position (703),
the method further comprises:
arranging the longitudinal axis (121) of the second boom (120) and the longitudinal axis (131) of the third boom (130) parallel to each other in the first intermediate position (271),
using the boom actuator (152) to rotate the third boom (130) relative to the second boom (120) from the first angular position (171) to the second intermediate position (702), and from the third intermediate position (703) to the second angular position (671), **characterized in that** the method further comprises:
directing an actuation direction of the boom actuator (152) through the rotation axis (906) between the second intermediate position and the third intermediate position, and
disabling the boom actuator (152) to allow the third boom (130) to pass from the second intermediate position (702) to the third intermediate position (703).

15. The method of claim 14, comprising
using gravity to rotate the third boom (130) from the second intermediate position (702) to the third intermediate position (703).

## Patentansprüche

1. Auslegersystem (102) zum Bewegen eines Vegetationsschneidwerkzeugs (104) relativ zu einem Fahrzeug (100) und Stützen des Vegetationsschneidwerkzeugs (104) während eines Betriebs desselben, wobei das Auslegersystem (102) Folgendes umfasst:
einen ersten Ausleger (110), einen zweiten Ausleger (120), einen dritten Ausleger (130) und einen vierten Ausleger (140);
eine Basis (105), die einen Verbinder umfasst, der dazu ausgelegt ist, das Auslegersystem (102) mit dem Fahrzeug (100) zu verbinden; und
ein Aktuatorsystem (150), das einen Auslegeraktuator (152) umfasst
wobei der erste Ausleger (110) mit der Basis (105) verbunden ist,
wobei der zweite Ausleger (120) eine Längsachse (121) aufweist und drehbar mit dem ersten Ausleger (110) verbunden ist,
wobei der dritte Ausleger (130) eine Längsachse (131) aufweist und drehbar mit dem zweiten Ausleger (120) verbunden ist,
wobei der vierte Ausleger (140) drehbar mit dem dritten Ausleger (130) verbunden ist,
wobei der vierte Ausleger (140) mit dem Vegetationsschneidwerkzeug (104) verbindbar ist,
wobei das Aktuatorsystem (150) dazu ausgelegt ist, den dritten Ausleger (130) entlang einer Drehachse (906) relativ zu dem zweiten Ausleger (120) entlang eines Bewegungsbereichs von einer ersten Winkelposition (171) in eine zweite Winkelposition (671) zu drehen,
wobei der Bewegungsbereich eine erste Zwischenposition (271), eine zweite Zwischenposition (702) und eine dritte Zwischenposition (703) beinhaltet,
wobei in der ersten Zwischenposition (271) die Längsachse (121) des zweiten Auslegers (120) und die Längsachse (131) des dritten Auslegers (130) parallel zueinander stehen,
wobei der Auslegeraktuator (152) dazu angeordnet ist, den dritten Ausleger (130) relativ zu dem zweiten Ausleger (120) von der ersten Winkelposition (171) in die zweite Zwischenposition (702) und von der dritten Zwischenposition (703) in die zweite Winkelposition (671) zu drehen, **dadurch gekennzeichnet, dass**
eine Betätigungsrichtung des Auslegeraktuators (152) durch die Drehachse (906) zwischen der zweiten Zwischenposition und der dritten Zwischenposition gerichtet ist,
wobei das Aktuatorsystem (150) dazu ausgelegt ist, den Auslegeraktuator (152) zu deaktivieren, um zu ermöglichen, dass der dritte Ausleger (130) von der zweiten Zwischenposition (702) in die dritte Zwischenposition (703) übergeht.

2. Auslegersystem (102) nach Anspruch 1, wobei der Auslegeraktuator (152) ein Linearaktuator ist, der mit dem zweiten Ausleger (120) verbunden und mit dem dritten Ausleger (130) verbunden ist.

3. Auslegersystem (102) nach einem der vorhergehenden Ansprüche, wobei das Aktuatorsystem (150) einen weiteren Aktuator umfasst, der dazu angeordnet ist, den dritten Ausleger (130) relativ zu dem zweiten Ausleger (120) von der zweiten Zwischenposition (702) in die dritte Zwischenposition (703) zu drehen, wenn der Auslegeraktuator (152) deaktiviert ist.

4. Auslegersystem (102) nach Anspruch 3, wobei der weitere Aktuator dazu angeordnet ist, den ersten Ausleger (110) relativ zu der Basis (105) und/oder den zweiten Ausleger (120) relativ zu dem ersten Ausleger (110) und/oder den vierten Ausleger (140) relativ zu dem dritten Ausleger (130) und/oder den vierten Ausleger (140) relativ zu dem Vegetationsschneidwerkzeug (104) zu drehen.

5. Auslegersystem (102) nach einem der vorhergehenden Ansprüche, wobei das Aktuatorsystem (150) dazu ausgelegt ist, den zweiten Ausleger (120) und/oder den dritten Ausleger (130) so zu positionieren, um zu ermöglichen, dass der dritte Ausleger (130) unter dem Einfluss von Schwerkraft von der zweiten Zwischenposition (702) in die dritte Zwischenposition (703) übergeht.

6. Auslegersystem (102) nach einem der vorhergehenden Ansprüche,
wobei der zweite Ausleger (120) mit einem Durchgang (1002) versehen ist, um zumindest einen Teil des Aktuatorsystems (150) aufzunehmen.

7. Auslegersystem (102) nach Anspruch 6,
wobei das Aktuatorsystem (150) ein Hydrauliksystem ist oder umfasst, das einen Hydraulikschlauch (904) zum Übertragen von Hydraulikfluid umfasst, wobei zumindest ein Teil des Hydraulikschlauchs (904) in dem Durchgang (1002) des zweiten Auslegers (120) angeordnet ist.

8. Auslegersystem (102) nach Anspruch 7, wobei der zweite Ausleger (120) über ein Gelenk (163) drehbar mit dem dritten Ausleger (130) verbunden ist, wobei das Gelenk (163) zwei Drehzapfen (902) umfasst, die koaxial entlang der Drehachse (906) mit einem Raum (908) zwischen den zwei Drehzapfen (902) ausgerichtet sind, wobei sich der Hydraulikschlauch (904) durch den Raum (908) zwischen den zwei Drehzapfen (902) erstreckt.

9. Auslegersystem (102) nach einem der Ansprüche 7 oder 8, wobei das Hydrauliksystem ein Verteilerventil (1000) umfasst, das an dem dritten Ausleger (130) angeordnet ist.

10. Auslegersystem (102) nach einem der vorhergehenden Ansprüche, wobei sich die erste Zwischenposition (271) zwischen der ersten Winkelposition (171) und der zweiten Zwischenposition (702) oder zwischen der zweiten Winkelposition (671) und der dritten Zwischenposition (703) befindet.

11. Auslegersystem (102) nach einem der vorhergehenden Ansprüche, das dazu ausgelegt ist, zwischen einer Transportposition und einer Betriebsposition zu wechseln,
wobei in der Transportposition das Vegetationsschneidwerkzeug (104) für einen Transport mit dem Fahrzeug (100) angeordnet ist, und
wobei in der Betriebsposition das Vegetationsschneidwerkzeug (104) für eine betriebliche Verwendung angeordnet ist,
wobei sich der dritte Ausleger (130) in der Transportposition in der ersten Winkelposition (171) befindet,
wobei sich der dritte Ausleger (130) in der Betriebsposition in der zweiten Winkelposition (671) befindet.

12. Auslegersystem (102) nach einem der vorhergehenden Ansprüche, das ein Sammelrohr (800) umfasst, das dazu angeordnet ist, während der betrieblichen Verwendung davon Vegetation an dem Vegetationsschneidwerkzeug (104) zu sammeln, wobei sich das Sammelrohr (800) entlang der Längsrichtung (121) des zweiten Auslegers (120) und der Längsrichtung (131) des dritten Auslegers (130) erstreckt, wobei das Sammelrohr (800) vorzugsweise dazu ausgestaltet ist, sich zusammen mit dem dritten Ausleger (130) entlang des Bewegungsbereichs zu drehen.

13. Fahrzeug (100), das das Auslegersystem (102) nach einem der vorhergehenden Ansprüche umfasst.

14. Verfahren zum Schneiden von Vegetation unter Verwendung eines Vegetationsschneidwerkzeugs (104), das an einem Auslegersystem (102) angebracht ist, wobei das Auslegersystem (102) Folgendes umfasst:
einen ersten Ausleger (110), einen zweiten Ausleger (120), einen dritten Ausleger (130) und einen vierten Ausleger (140) und einen Auslegeraktuator (152), und
wobei der erste Ausleger (110) mit einer Basis (105) verbunden ist,
wobei der zweite Ausleger (120) eine Längsachse (121) aufweist und drehbar mit dem ersten Ausleger (110) verbunden ist,
wobei der dritte Ausleger (130) eine Längsachse (131) aufweist und drehbar mit dem zweiten Ausleger (120) verbunden ist,
wobei der vierte Ausleger (140) drehbar mit dem dritten Ausleger (130) verbunden ist,
wobei der vierte Ausleger (140) mit dem Vegetationsschneidwerkzeug (104) verbunden ist,
wobei das Verfahren Folgendes umfasst:
Drehen des dritten Auslegers (130) entlang einer Drehachse (906) relativ zu dem zweiten Ausleger (120) entlang eines Bewegungsbereichs von einer ersten Winkelposition (171) in eine zweite Winkelposition (671), wobei der Bewegungsbereich eine erste Zwischenposition (271), eine zweite Zwischenposition (702) und eine dritte Zwischenposition (703) beinhaltet,
wobei das Verfahren ferner Folgendes umfasst:
Anordnen der Längsachse (121) des zweiten Auslegers (120) und der Längsachse (131) des dritten Auslegers (130) parallel zueinander in der ersten Zwischenposition (271), Verwenden des Auslegeraktuators (152), um den dritten Ausleger (130) relativ zu dem zweiten Ausleger (120) von der ersten Winkelposition (171) in die zweite Zwischenposition (702) und von der dritten Zwischenposition (703) in die zweite Winkelposition (671) zu drehen,
**dadurch gekennzeichnet, dass** das Verfahren ferner Folgendes umfasst:
Richten einer Betätigungsrichtung des Auslegeraktuators (152) durch die Drehachse (906) zwischen der zweiten Zwischenposition und der dritten Zwischenposition, und
Deaktivieren des Auslegeraktuators (152), um zu ermöglichen, dass der dritte Ausleger (130) von der zweiten Zwischenposition (702) in die dritte Zwischenposition (703) übergeht.

15. Verfahren nach Anspruch 14, das Folgendes umfasst Verwenden von Schwerkraft, um den dritten Ausleger (130) von der zweiten Zwischenposition (702) in die dritte Zwischenposition (703) zu drehen.

## Revendications

1. Système de flèche (102) pour mouvoir un outil de coupe de végétation (104) relativement à un véhicule (100) et supporter l'outil de coupe de végétation (104) durant le fonctionnement de celui-ci, le système de flèche (102) comprenant :
une première flèche (110), une deuxième flèche (120), une troisième flèche (130), et une quatrième flèche (140) ;
une base (105) comprenant une pièce de liaison adaptée pour relier le système de flèche (102) au véhicule (100) ; et
un système d'actionneur (150) comprenant un actionneur de flèche (152),
dans lequel la première flèche (110) est reliée à la base (105),
dans lequel la deuxième flèche (120) a un axe longitudinal (121) et est reliée de façon rotative à la première flèche (110),
dans lequel la troisième flèche (130) a un axe longitudinal (131) et est reliée de façon rotative à la deuxième flèche (120),
dans lequel la quatrième flèche (140) est reliée de façon rotative à la troisième flèche (130),
dans lequel la quatrième flèche (140) peut être reliée à l'outil de coupe de végétation (104),
dans lequel le système d'actionneur (150) est adapté pour mettre en rotation la troisième flèche (130) le long d'un axe de rotation (906) relativement à la deuxième flèche (120) le long d'une étendue de mouvement allant d'une première position angulaire (171) à une seconde position angulaire (671),
dans lequel l'étendue de mouvement inclut une première position intermédiaire (271), une deuxième position intermédiaire (702) et une troisième position intermédiaire (703),
dans lequel, dans la première position intermédiaire (271), l'axe longitudinal (121) de la deuxième flèche (120) et l'axe longitudinal (131) de la troisième flèche (130) sont parallèles l'un à l'autre,
dans lequel l'actionneur de flèche (152) est agencé pour mettre en rotation la troisième flèche (130) relativement à la deuxième flèche (120), de la première position angulaire (171) à la deuxième position intermédiaire (702), et de la troisième position intermédiaire (703) à la seconde position angulaire (671), **caractérisé en ce que**,
une direction d'actionnement de l'actionneur de flèche (152) est orientée à travers l'axe de rotation (906) entre la deuxième position intermédiaire et la troisième position intermédiaire,
dans lequel le système d'actionneur (150) est configuré pour désactiver l'actionneur de flèche (152) pour permettre à la troisième flèche (130) de passer de la deuxième position intermédiaire (702) à la troisième position intermédiaire (703).

2. Système de flèche (102) selon la revendication 1, dans lequel l'actionneur de flèche (152) est un actionneur linéaire relié à la deuxième flèche (120) et relié à la troisième flèche (130).

3. Système de flèche (102) selon l'une quelconque des revendications précédentes, dans lequel le système d'actionneur (150) comprend un actionneur supplémentaire agencé pour mettre en rotation la troisième flèche (130) relativement à la deuxième flèche (120), de la deuxième position intermédiaire (702) à la troisième position intermédiaire (703), lorsque l'actionneur de flèche (152) est désactivé.

4. Système de flèche (102) selon la revendication 3, dans lequel l'actionneur supplémentaire est agencé pour mettre en rotation au moins une de la première flèche (110) relativement à la base (105), de la deuxième flèche (120) relativement à la première flèche (110), de la quatrième flèche (140) relativement à la troisième flèche (130), et de la quatrième flèche (140) relativement à l'outil de coupe de végétation (104).

5. Système de flèche (102) selon l'une quelconque des revendications précédentes, dans lequel le système d'actionneur (150) est adapté pour positionner la deuxième flèche (120) et/ou la troisième flèche (130) pour permettre à la troisième flèche (130) de passer de la deuxième position intermédiaire (702) à la troisième position intermédiaire (703) sous l'influence de gravité.

6. Système de flèche (102) selon l'une quelconque des revendications précédentes,
dans lequel la deuxième flèche (120) est pourvue d'un passage (1002) pour loger au moins une partie du système d'actionneur (150).

7. Système de flèche (102) selon la revendication 6, dans lequel le système d'actionneur (150) est ou comprend un système hydraulique comprenant un tuyau flexible hydraulique (904) pour le transfert de fluide hydraulique, dans lequel au moins une partie du tuyau flexible hydraulique (904) est agencée dans le passage (1002) de la deuxième flèche (120).

8. Système de flèche (102) selon la revendication 7, dans lequel la deuxième flèche (120) est reliée de façon rotative à la troisième flèche (130) par l'intermédiaire d'une articulation (163), dans lequel l'articulation (163) comprend deux tiges de pivotement (902) coaxialement alignées le long de l'axe de rotation (906) avec un espace (908) entre les deux tiges de pivotement (902), dans lequel le tuyau flexible hydraulique (904) s'étend à travers l'espace (908) entre les deux tiges de pivotement (902).

9. Système de flèche (102) selon l'une quelconque de la revendication 7 ou 8, dans lequel le système hydraulique comprend une soupape de distribution (1000) agencée sur la troisième flèche (130).

10. Système de flèche (102) selon l'une quelconque des revendications précédentes, dans lequel la première position intermédiaire (271) est entre première position angulaire (171) et la deuxième position intermédiaire (702) ou entre la seconde position angulaire (671) et la troisième position intermédiaire (703).

11. Système de flèche (102) selon de quelconques des revendications précédentes, adapté pour changer entre une position de transport et une position de fonctionnement, dans lequel, dans la position de transport, l'outil de coupe de végétation (104) est agencé pour le transport avec le véhicule (100), et,
dans lequel, dans la position de fonctionnement, l'outil de coupe de végétation (104) est agencé pour utilisation de fonctionnement,
dans lequel la troisième flèche (130) est dans la première position angulaire (171) dans la position de transport,
dans lequel la troisième flèche (130) est dans la seconde position angulaire (671) dans la position de fonctionnement.

12. Système de flèche (102) selon l'une quelconque des revendications précédentes, comprenant un tube collecteur (800) agencé pour collecter de la végétation au niveau de l'outil de coupe de végétation (104) durant l'utilisation de fonctionnement de celui-ci, dans lequel le tube collecteur (800) s'étend le long de la direction longitudinale (121) de la deuxième flèche (120) et de la direction longitudinale (131) de la troisième flèche (130), dans lequel de préférence le tube collecteur (800) est configuré pour entrer en rotation conjointement avec la troisième flèche (130) le long de l'étendue de mouvement.

13. Véhicule (100), comprenant le système de flèche (102) selon l'une quelconque des revendications précédentes.

14. Procédé pour couper de la végétation en utilisant un outil de coupe de végétation (104) fixé à un système de flèche (102), le système de flèche (102) comprenant :
une première flèche (110), une deuxième flèche (120), une troisième flèche (130), et une quatrième flèche (140), et un actionneur de flèche (152), et
dans lequel la première flèche (110) est reliée à une base (105),
dans lequel la deuxième flèche (120) a un axe longitudinal (121) et est reliée de façon rotative à la première flèche (110),
dans lequel la troisième flèche (130) a un axe longitudinal (131) et est reliée de façon rotative à la deuxième flèche (120),
dans lequel la quatrième flèche (140) est reliée de façon rotative à la troisième flèche (130),
dans lequel la quatrième flèche (140) est reliée à l'outil de coupe de végétation (104),
le procédé comprend :
la mise en rotation de la troisième flèche (130) le long d'un axe de rotation (906) relativement à la deuxième flèche (120) le long d'une étendue de mouvement allant d'une première position angulaire (171) à une seconde position angulaire (671),
dans lequel l'étendue de mouvement inclut une première position intermédiaire (271), une deuxième position intermédiaire (702) et une troisième position intermédiaire (703),
le procédé comprend en outre :
l'agencement de l'axe longitudinal (121) de la deuxième flèche (120) et de l'axe longitudinal (131) de la troisième flèche (130) parallèlement l'un à l'autre dans la première position intermédiaire (271),
l'utilisation de l'actionneur de flèche (152) pour mettre en rotation la troisième flèche (130) relativement à la deuxième flèche (120), de la première position angulaire (171) à la deuxième position intermédiaire (702), et de la troisième position intermédiaire (703) à la seconde position angulaire (671),
**caractérisé en ce que** le procédé comprend en outre :
l'orientation d'une direction d'actionnement de l'actionneur de flèche (152) à travers l'axe de rotation (906) entre la deuxième position intermédiaire et la troisième position intermédiaire, et
la désactivation de l'actionneur de flèche (152) pour permettre à la troisième flèche (130) de passer de la deuxième position intermédiaire (702) à la troisième position intermédiaire (703).

15. Procédé de la revendication 14, comprenant l'utilisation de gravité pour mettre en rotation la troisième flèche (130), de la deuxième position intermédiaire (702) à la troisième position intermédiaire (703).
